# EUROPÄISCHE PATENTSCHRIFT

(11) **EP 0 775 602 B1**
(45) Veröffentlichungstag und Bekanntmachung des Hinweises auf die Patenterteilung: **27.10.1999**
(21) Anmeldenummer: 96115186.7
(22) Anmeldetag: 21.09.1996
(51) Int. Cl.: B60G 15/07, B25B 27/00, B62D 65/00

(54) **Vorrichtung zum Einstellen eines Fahrzeugrades**
Device to adjust the wheeel of a vehicle
Dispositif d'ajustement de la roue d'un véhicule

(30) Priorität: 24.11.1995 DE 19543798
(43) Veröffentlichungstag der Anmeldung: 28.05.1997
(73) Patentinhaber: Dr.Ing.h.c. F. Porsche Aktiengesellschaft, 70435 Stuttgart (DE)
(72) Erfinder: Kunert, Reinhard, 71287 Weissach (DE)

(56) Entgegenhaltungen:
- EP-A- 0 110 045
- EP-A- 0 117 976
- EP-A- 0 174 007
- EP-A- 0 255 921
- DE-A- 2 452 066
- FR-A- 2 425 625
- US-A- 4 372 575
- US-A- 4 958 849
- PATENT ABSTRACTS OF JAPAN vol. 012, no. 360 (M-746), 27.September 1988 & JP 63 116916 A (HONDA MOTOR CO LTD), 21.Mai 1988,

## Beschreibung

Die Erfindung bezieht sich auf eine Vorrichtung zum Ein- und Verstellen eines Radsturzes eines Fahrzeugrades am Federbein einer Radaufhängung nach dem Oberbegriff des Anspruchs 1.

Aus der US-PS 4,372,575 ist ein Dämpferbein bekannt, das im Dom eines Fahrzeugaufbaus über Schrauben befestigt ist, die in Längs- und Querschlitzen derart verschiebbar sind, daß das Dämpferbein und somit das Rad eingestellt werden kann.

Aufgabe der Erfindung ist es, eine Vorrichtung zum Einstellen eines Fahrzeugrades hinsichtlich des Radsturzes zu schaffen, mit der eine Grundeinstellung bzw. eine Korrektur der Einstellung in einfacher Weise erfolgen kann.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß ein Werkzeug verwendet wird, das von außen auf das Federbein bzw. auf den Federbeindom so aufsetzbar ist, daß das am Federbein-Dom über Befestigungsschrauben gehaltene Federbein in seiner Lage entsprechend des vorgegebenen Radsturzes einstellbar ist bzw. eine vorhandene Sturzeinstellung korrigierbar wird.

Hierzu weist das Werkzeug an einem Ende eine Aufnahmebohrung für mindestens eine Befestigungsschraube auf, wobei das andere Ende einen sogenannten Fixierdorn besitzt, der in eine Bohrung eines Domkopfes eingreift, welcher oberhalb des Aufbaudoms angeordnet ist.

Alternativ ist das Werkzeug in der Weise ausgebildet , daß der Träger eine innere zylinderförmige Ausnehmung umfaßt, die den Domkopf von außen übergreift und eine Befestigungsschraube des Federbeines von einem Aufnahmeelement aufgenommen wird. Dieses Aufnahmeelement ist entsprechend der beiden anderen Ausführungsformen hinsichtlich seiner Befestigung im Träger ausgestaltet.

Der Fixierdorn des Werkzeuges weist einen in die Bohrung des Domkopfes eingreifendes Kopfteil auf. Die Bohrung ist etwa zentrisch zur Achse des Federbeines angeordnet, so daß über das Werkzeug bei Verbindung mit mindestens einer der Befestigungsschrauben eine vorgegebene Sturzeinstellung erzielt wird.

Der Fixierdorn ist innerhalb einer Bohrung im Werkzeugträger verschiebbar, so daß das Maß von der Aufnahmebohrung bis zum Fixierdorn variabel je nach Größe des einzustellenden Sturzes gewählt werden kann.

Über eine Mutter auf dem Gewindebolzen ist der Fixierdorn am Träger verspannbar.

Nach einer weiteren Ausführungsform kann der Fixierdorn mit einem Stellelement, wie beispielsweise einer Exzenterscheibe versehen sein, die in einer nutförmigen Ausnehmung des Trägers geführt ist. Durch Markierungen und Skalen am Träger bzw. an der Exzenterscheibe kann die Einstellung des Radsturzes dann in einfacher Weise nachvollziehbar und gut sichtbar erfolgen.

Mit dem Werkzeug wird in einfacher Weise eine Einstellung oder Korrektur des Radsturzes vorgenommen, wobei dies bei der Fahrzeugherstellung oder auch bei einer Reparaturmontage erfolgen kann.

Ausführungsbeispiele der Erfindung sind in der Zeichnung näher dargestellt und werden nachfolgend beschrieben.

Es zeigen
- Fig. 1: eine Draufsicht auf eine Einstellvorrichtung, bestehend aus einem handhabbaren Werkzeug,
- Fig. 2: einen Schnitt nach der Linie II-II der Fig. 1 durch das Werkzeug,
- Fig. 3: eine weitere Ausführungsform des Werkzeuges mit einem Exzenterelement und
- Fig. 4: eine weitere Ausführungsform eines Werkzeuges mit einer inneren zylinderförmigen Aufnahme und einem Aufnahmeteil

Die Vorrichtung zum Einstellen eines Radsturzes an einem Fahrzeugrad besteht im wesentlichen aus einem handhabbaren Einstellwerkzeug 1; 1a. Dies wird am aufbauseitigen Lagerort eines Federbeines 2 angesetzt, um ein vorbestimmtes Maß a einzustellen. Dieses Maß a bestimmt den Radsturz am Fahrzeugrad, da das Federbein unmittelbar mit dem Radträger verbunden ist und beispielsweise aus einem Mc Pherson Federbein besteht.

Das Federbein 2 ist mit seinem oberen Ende in einem Dom 12 des Fahrzeugaufbaus über drei Befestigungsschrauben 14, 15 und 16 gehalten. Eine Verstellung des Federbeines 2 erfolgt in quer zur Fahrtrichtung F angeordneten Schlitzen 17 im Dom 12.

Das Werkzeug 1 umfaßt einen Träger 3, der an seinem einen Ende einen Fixierdorn 4 und an seinem abgekehrten anderen Ende ein Aufnahmeelement 5 mit einer Bohrung 6 aufweist.

Der Fixierdorn 4 umfaßt einen Gewindezapfen 7 mit einem Sechskantkopf 8 und einem endseitigen Kopfteil 9. Dieses Kopfteil ragt in eine Bohrung 10 eines Domkopfes 11, der sich oberhalb des Domes 12 des Fahrzeugaufbaus befindet, hinein. Das abgekehrte Ende des Trägers 3 trägt das Aufnahmeelement 5, welches mit seiner Bohrung 6 auf einer Schraube 14, 15 oder 16 sitzt.

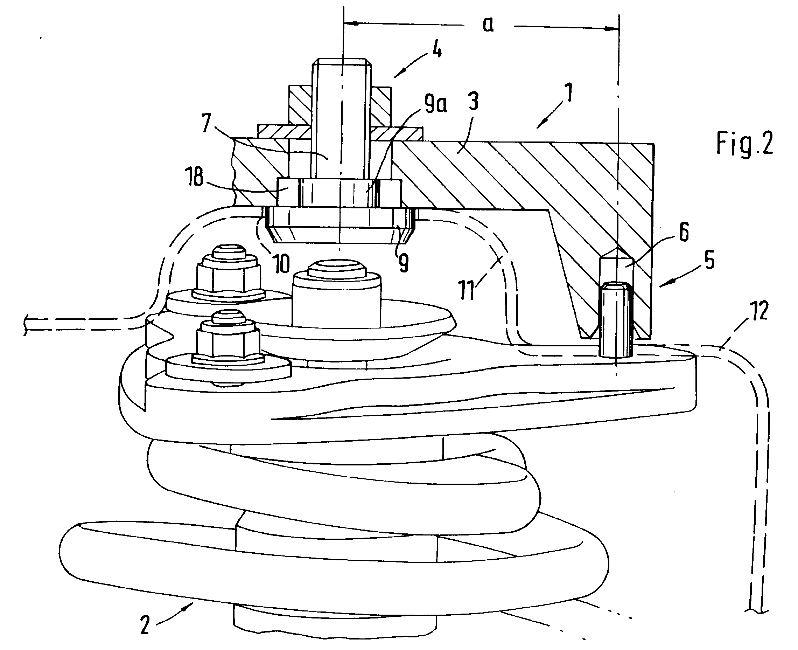

Der Fixierdorn 4 ist so aufgebaut, daß, wie Fig. 2 zeigt, eine feste Einstellung des Maßes a erfolgt. Dies wird durch Festsetzen des Gewindezapfens 7 in dem Träger 3 erzielt. Der Freiraum 18, welcher in bezug auf die Fahrtrichtung F als Querschlitz ausgebildet ist, gibt die Möglichkeit eines Einstellen des Maßes a entweder größer oder kleiner.

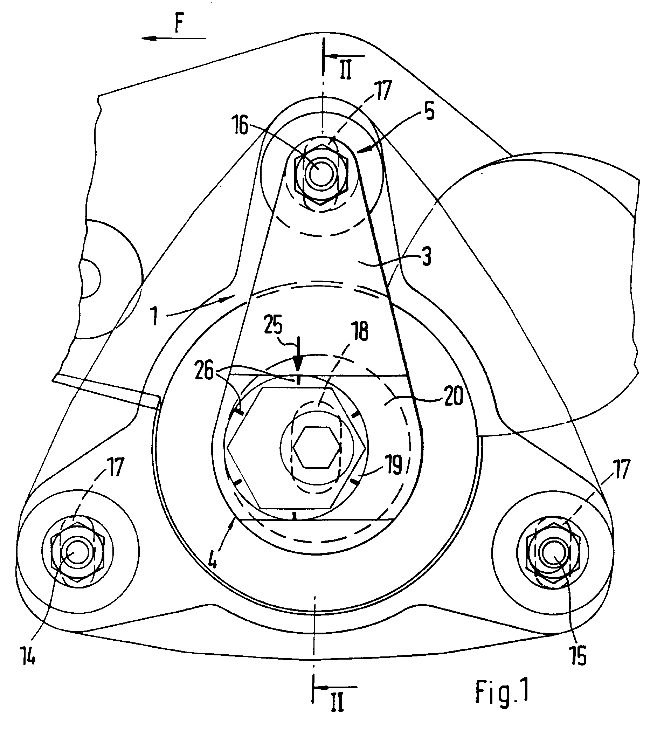

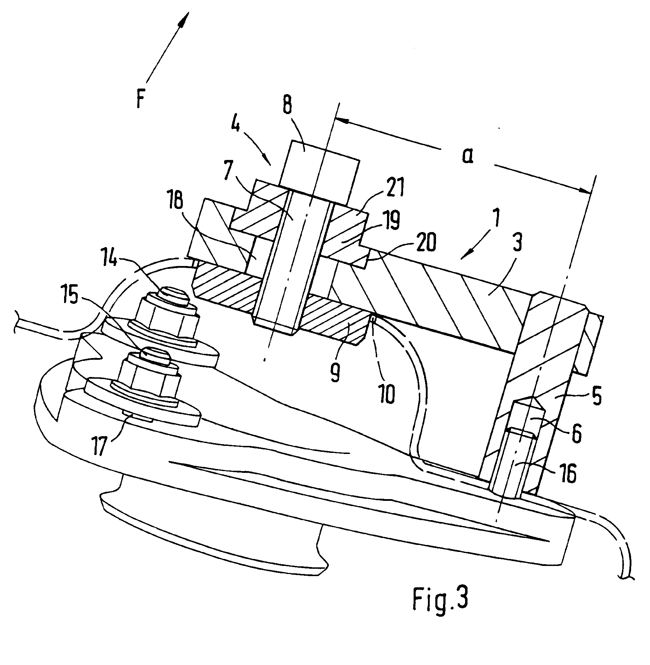

In den Fig. 1 und 3 ist der Gewindezapfen 7 endseitig mit dem Kopfteil 9 verbunden, welcher in die Bohrung 10 ragt. Über eine mit dem Zapfen 7 verbundene Exzenterscheibe 19, die in einer nutförmigen Ausnehmung 20 geführt ist, kann eine stufenlose Einstellung bzw. Korrektur des Radsturzes erfolgen. Die Exzenterscheibe 19 weist zum Verstellen einen Sechskant 21 auf.

Damit eine Sturzeinstellung nach einer sichtbaren Vorgabe erfolgen kann, weist der Träger 3 eine Markierung 25 und die Exzenterscheibe 19 eine Skala 26 auf.

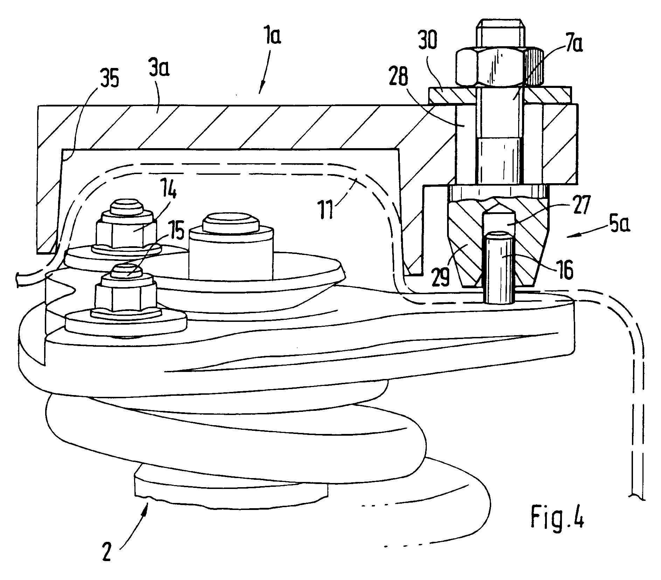

Nach einer weiteren Ausführung gemäß Fig. 4 besteht das Werkzeug 1a aus einem Träger 3a mit einer inneren zylinderförmigen Aufnahme 35, die den Domkopf 11 von oben übergreift. Das dieser Aufnahme 35 abgekehrte Ende des Trägers 3a weist ein Aufnahmeelement 5a mit einer Bohrung 27 auf, in welche beispielsweise eine Befestigungsschraube 16 hineinragt. Das Aufnahmeelement 5a ist mit einem Gewindebolzen 7a verbunden, welcher in dem Träger 3a festsetzbar ist. Der Längsschlitz 28 gibt die Möglichkeit einer Einstellung des Maßes a. Auch bei dieser Ausführungsform kann eine im Träger 3a geführte Exzenterscheibe 19 gemäß der Ausführung nach Fig. 3 vorgesehen sein.

## Patentansprüche

1. Vorrichtung zum Einstellen und verstellen eines Radsturzes eines Fahrzeugrades am Federbein (2) einer Radaufhängung, wobei das Federbein in einem mit einem Domkopf (11) versehenen Dom (12) eines Fahrzeugaufbaus über Befestigungsschrauben (14-16) festgesetzt ist, welche in quer zur Fahrtrichtung (F) im Dom angeordneten Schlitzen (17) gehalten sind, **dadurch gekennzeichnet**, daß mindestens eine der Befestigungsschrauben (16) mit einem Aufnahmeelement (5; 5a) eines Einstellwerkzeugs (1; 1a) in Verbindung steht, wobei das Einstellwerkzeug (1) mit einem Fixierdorn (4) versehen ist, der in eine Bohrung (10) des Domkopfes (11) einsteckbar ist oder wobei das Einstellwerkzeug (1a) mit einer inneren zylindrischen Aufnahme (35) versehen ist, die den Domkopf (11) von außen übergreift.

2. Vorrichtung nach den Ansprüchen 1, **dadurch gekennzeichne**t daß das Einstellwerkzeug einen brückenartigen Träger (3) umfaßt, der zur Verbindung mit der einen Befestigungsschraube an einem Ende einen Ansatz mit dem Aufnahmeelement (5) und am anderen Ende den Fixierdorn (4) aufweist.

3. Vorrichtung nach Anspruch 2, **dadurch gekennzeichnet**, daß der Fixierdorn (4) aus einen am Träger (3) in der Bohrung (10) des Domkopfes (11) abgestützten Kopfteil (9), einem anschließenden Anschlagteil (9a) sowie einem Gewindezapfen (7) besteht, der am Träger (3) festsetzbar ist, derart, daß das Grundmaß (a) vom Fixierdorn (4) bis zu einer Bohrung (6) im Aufnahmeelement (5) einstellbar ist.

4. Vorrichtung nach Anspruch 3, **dadurch gekennzeichnet**, daß der Fixierdorn (4) eine auf dem Gewindezapfen (7) gehaltene und in einer Ausnehmung (20) verdrehbare Exzenterscheibe (19) aufweist, die einen Stellsechskant (21) umfaßt.

5. Vorrichtung nach Anspruch 4, **dadurch gekennzeichnet**, daß die Ausnehmung (20) im Träger (3) aus einer - in Fahrtrichtung (F) gesehenen - Längsnut besteht, welche eine Markierung (25) aufweist, die mit einer Skala (26) an der Exzenterscheibe (19) zur Sturzeinstellung zusammenwirkt.

6. Vorrichtung nach Anspruch 1, **dadurch gekennzeichnet**, daß das Einstellwerkzeug einen brückenartigen Träger (3a) umfaßt, der zur Verbindung mit der einen Befestigungsschraube an einem Ende das Aufnahmeelement (5a) mit einer Aufnahmebohrung (27) und am anderen Ende mit der inneren zylindrischen Aufnahme (35) versehen ist, die über den Domkopf (11) stülpbar ist.

7. Vorrichtung nach Anspruch 6, **dadurch gekennzeichnet**, daß das Aufnahmeelement (5a) einen abgesetzten Gewindebolzen (7a) umfaßt, der zwischen einem Bolzenkopf (29) und einer Scheibe (30) den Träger (3a) zwischen sich eingespannt hält, wobei die Aufnahmebohrung (27) im Träger (3a) einen Freiraum (28) zum Gewindebolzen (7a) zur Erzielung einer Einstellung aufweist.

## Claims

1. A device for setting and adjusting a camber of a vehicle wheel on the telescopic leg (2) of a wheel suspension, wherein the telescopic leg is secured in a dome (12) - provided with a head (11) - of a vehicle body by way of fastening bolts (14-16) held in slots (17) arranged in the dome transversely to the direction of travel (**F**), **characterized in that** at least one of the fastening bolts (16) is connected to a receiving member (5; 5a) of a setting tool (1; 1a), wherein the setting tool (1) is provided with a fixing mandrel (4) insertable in a bore (10) in the head (11) of the dome, or wherein the setting tool (1a) is provided with an internal cylindrical receiving means (35) engaging over the head (11) of the dome from the outside.

2. A device according to Claim 1, **characterized in that** the setting tool comprises a bridge-like support (3) which, for connexion to one fastening bolt, is provided at one end with an attachment together with the receiving member (5) and at the other end with the fixing mandrel (4).

3. A device according to Claim 2, **characterized in that** the fixing mandrel (4) comprises a head part (9) supported on the support (3) in the bore (10) in the head (11) of the dome, an adjoining stop part (9a) and a threaded pin (7) securable on the support (3) in such a way that the basic dimension (**a**) from the fixing mandrel (4) to a bore (6) in the receiving member (5) is adjustable.

4. A device according to Claim 3, **characterized in that** the fixing mandrel (4) is provided with an eccentric disc (19) held on the threaded pin (7) and rotatable in a recess (20) and comprising a setting hexagon (21).

5. A device according to Claim 4, **characterized in that** the recess (20) in the support (3) comprises a longitudinal groove - as viewed in the direction of travel (**F**) - provided with a marking (25) cooperating with a scale (26) on the eccentric disc (19) for setting the camber.

6. A device according to Claim 1, **characterized in that** the setting tool comprises a bridge-like support (3a) which, for connexion to one fastening bolt, is provided at one end with the receiving member (5a) together with a receiving bore (27) and at the other end with the internal cylindrical receiving means (35) which can be inverted over the head (11) of the dome.

7. A device according to Claim 6, **characterized in that** the receiving member (5a) comprises a stepped threaded pin (7a) holding the support (3a) between a head (29) of the said pin and a disc (30) in a manner clamped therebetween, wherein the receiving bore (27) in the support (3a) is provided with a free space (28) with respect to the threaded pin (7a) in order to perform the adjustment.

## Revendications

1. Dispositif pour régler et ajuster le carrossage d'une roue de véhicule sur la jambe de force à ressort (2) d'une suspension de roue, la jambe de force à ressort étant fixée dans un dôme (12), pourvu d'une tête (11), d'une carrosserie de véhicule, par des vis de fixation (14 à 16) qui sont maintenues dans des fentes (17) pratiquées dans le dôme, perpendiculairement au sens de marche (F), caractérisé en ce qu'au moins l'une des vis de fixation (16) est en liaison avec un élément formant logement (5 ; 5a) d'un outil de réglage (1; 1a), l'outil de réglage (1) étant pourvu d'une broche d'indexation (4) qui peut être introduite dans un perçage (10) de la tête (11) du dôme, ou l'outil de réglage (1a) étant pourvu d'un logement (35) cylindrique intérieur qui chapeaute de l'extérieur la tête (11) du dôme.

2. Dispositif selon la revendication 1, caractérisé en ce que l'outil de réglage comprend un support (3) du type en pont qui, pour la liaison avec l'une des vis de fixation, présente à une extrémité un appendice avec l'élément formant logement (5) et à l'autre extrémité la broche d'indexation (4).

3. Dispositif selon la revendication 2, caractérisé en ce que la broche d'indexation (4) est constituée d'une partie de tête (9) en appui sur le support (3) dans le perçage (10) de la tête (11) du dôme, d'une partie de butée (9a) s'y raccordant, ainsi que d'une tige filetée (7), qui peut être fixée au support (3) de manière que la cote de base (a) entre la broche d'indexation (4) et un perçage (6) de l'élément formant logement (5) puisse être reglée.

4. Dispositif selon la revendication 3, caractérisé en ce que la broche d'indexation (4) présente un disque excentrique (19) maintenu sur la tige filetée (7) et pouvant tourner dans un évidement (20), lequel disque excentrique comprend un hexagone de réglage (21).

5. Dispositif selon la revendication 4, caractérisé en ce que l'évidement (20) dans le support (3) est constitué d'une rainure longitudinale -vue dans le sens de marche (F)- qui présente un marquage (25) lequel coopère avec une échelle (26) sur le disque excentrique (19) pour le réglage du carrossage.

6. Dispositif selon la revendication 1, caractérisé en ce que l'outil de réglage comprend un support (3a) du type en pont qui, pour la liaison avec l'une des vis de fixation, est pourvu, à une extrémité, de l'élément formant logement (5a) avec un perçage formant logement (27) et à l'autre extrémité, du logement (35) cylindrique intérieur qui peut être emboîté sur la tête (11) du dôme.

7. Dispositif selon la revendication 6, caractérisé en ce que l'élément formant logement (5a) comprend un boulon (7a) étagé, qui maintient serré le support (3a) entre une tête de boulon (29) et une rondelle (30), le perçage formant logement (27) dans le support (3a) présentant un espace libre (28) par rapport au boulon (7a) pour obtenir un réglage.
